Europäisches Patentamt

European Patent Office

Office européen des brevets

(19)

(11) **EP 0 828 139 A2**

(12) **EUROPÄISCHE PATENTANMELDUNG**

(43) Veröffentlichungstag:
**11.03.1998 Patentblatt 1998/11**

(51) Int. Cl.$^6$: **G01C 19/66**

(21) Anmeldenummer: 97115135.2

(22) Anmeldetag: **02.09.1997**

(84) Benannte Vertragsstaaten:
**AT BE CH DE DK ES FI FR GB GR IE IT LI LU MC NL PT SE**

(30) Priorität: **05.09.1996 DE 19635982**

(71) Anmelder:
**Daimler-Benz Aerospace
Aktiengesellschaft
81663 München (DE)**

(72) Erfinder:
• **Halldorsson, Thorsteinn
  81927 München (DE)**
• **Schmitt, Nikolaus, Dr.
  80797 München (DE)**

(54) **Festkörperkreisel**

(57) In dem diodengepumpten Festkörperlaserkreisel verläuft ein Ringlaserstrahl an mindestens einer Stelle durch eine Grenzfläche des Lasermaterials zur Luft, wobei der Einfallswinkel ($\varphi_B$) des Ringstrahles bei der Brechnung an der Grenzfläche gleich dem Brewsterwinkel des Lasermaterials ist und wobei der Ringstrahl innerhalb des Lasermaterials an den Grenzflächen zur Luft durch Totalreflexion umgelenkt wird.

Fig.1

EP 0 828 139 A2

**Beschreibung**

Die Erfindung betrifft einen diodengepumpten Festkörperlaserkreisel in dem ein Ringlaserstrahl an mindestens einer Stelle durch eine Grenzfläche des Lasermaterials zur Luft verläuft.

Diodengepumpte Festkörperlaser z.B. der Seltenen Erden wie Neodymium und Erbium in dotierten Kristallen wie Neodymium-Yttrium-Aluminium-Granat, (Nd:YAG) oder Gläsern wie des Erbium-Ytterbium-Phosphatglases, (Er:Yb:Glas) sind wegen ihrer guten Frequenzstabilität und geringen Linienbreite als Ringlaser eines Sagnac-Interferometers gut geeignet und z.B. aus der DE 40 08 226 A1 bekannt. Das Sagnac-Interferometer dient zur Messung von Drehbewegungen um die Achse senkrecht zur Ebene des Ringresonators. In dem Ringresonator entstehen gegenläufige Ringstrahlen, die im Ruhestand gleiche Frequenz haben. Bei einer Drehung wirkt sich der Doppler-Effekt auf die eine Welle positiv und die andere negativ aus und es entsteht eine Frequenzdifferenz $\Delta f$ zwischen den beiden Wellen, die proportional ist zu der Drehrate $\Omega$, mit:

$$\Delta f = 4\Omega A/\lambda L \tag{1}$$

wobei A die von dem Ringresonator umschlossene Fläche, L die Lange des optischen Weges und $\lambda$ die Wellenlänge bezeichnet. In dem Sagnac-Interferometer wird ein Teil der beiden Ringstrahlen aus dem Ring ausgekoppelt und zur Interferenz auf einem Photodetektor gebracht. Die Anzahl der Interferenzstreifen, die sich pro Zeiteinheit über den Photodetektor bewegen, ist dann gleich der Differenzfrequenz.

Ein diodengepumpter Festkörperlaser kann als ein Ringlaser eines Sagnac-Interferometers ausgebildet werden, indem der Ring im Inneren des Laser-Kristalls oder -Glases durch die Totalreflexion an seinen Grenzflächen umgelenkt wird, und eine Krümmung der polierten Oberflächen für die Entstehung einer stabilen Lasermode sorgt. Zur Anregung kann die Strahlung über die Grenzfläche entlang der reflektierten Lasermode gebündelt werden. Zur Auskoppelung eines definierten Anteils der Ringstrahlung für die Frequenzmessung kann das bekannte Tunneln des Lichtes am Ort der Totalreflexion über einen Luftspalt mit einer Breite kürzer als die Wellenlänge zu einem benachbarten Dielektrikum genutzt werden.

In dem klassischen Helium-Neon-Gaslaserkreisel dienen externe dielektrische Spiegel zur Umlenkung und Auskoppelung des Laserstrahles. Bei dem Einfall einer Ringstrahlung auf eine dielektrische Schicht entsteht Streulicht, das zum Teil in der entgegengesetzten Strahlrichtung läuft und in Konkurrenz mit der zweiten, gegenläufigen Ringstrahlung weiter verstärkt wird, und den störenden „lock-in" Effekt, d.h. das Zusammenziehen der Frequenzen, beider Ringstrahlungen verursacht. Bei der Verwendung der Totalreflexion zur Strahlumlenkung und des Tunneleffektes zur Auskoppelung wird die Entstehung von Streulicht an den Grenzflächen eines Festkörperringlasers weitgehend vermieden.

Eine vollständige Umlenkung um 360° durch Totalreflexion kann am einfachsten innerhalb einer rechteckig geschliffenen Laserscheibe, in dem sog. monolithischen Ringlaser, d.h. einem Laserresonator in dem der Strahl nur innerhalb des Lasermediums verläuft, realisiert werden. Der monolithische Aufbau ist vor allem für kleine (Durchmesser < 1cm) und mechanisch und thermisch stabile Laserkreisel besonders geeignet. In einem Würfel können z.B. in den zueinander senkrechten Ebenen drei voneinander unabhängige monolithische Ringlaser zur Messung von Drehungen um die drei Koordinatenachsen gleichzeitig betrieben werden.

Es werden aber Altenativen zu dem monolithischen Aufbau des Ringlasers aus mehreren Gründen gebraucht: Die Meßauflassung eines Laserkreisels wächst proportional zu dem Durchmesser des Ringresonators wie aus der Formel (1) zu entnehmen ist. Zum Bau von größeren Ringlasern (Durchmesser >2 cm) hoher Auflösung ist der monolithische Aufbau wegen der schwierigeren Herstellung und Bearbeitung eines größeren Kristall- oder Glasstückes hoher Qualität nicht immer vorteilhaft.

In Dreiniveau-Lasern (Grundzustandslasern) führt eine unvollständige Ausleuchtung des Resonatormodes zur Eigenabsorption der Strahlung in dem Material auf Kosten der Effizienz, verbunden mit einer Erhöhung des Photonenrauschens. Je größer ein monolithischer Laserkreisel ist, desto schwieriger wird es, das Modenvolumen vollständig auszuleuchten. In größeren Laserkreiseln mit guter Auflösung ist auch die Verwendung von Meßstrahlung mit hohem Polarisationsgrad erforderlich. Eine polarisierte Strahlung läßt sich in einem monolithischen Kristallaser nur in anisotropen Kristallen herstellen, was die Auswahl der Kristalle einengt. In Lasergläsern muß die Polarisation durch induzierte Doppelbrechung mit Hilfe eines definierten Druckes auf das Material oder durch Totalreflexion sehr nahe am Grenzwinkel durchgeführt werden, was relativ aufwendig ist. Für diesen Zweck wird eine zusätzliche effizientere Methode der Polarisation der Strahlung gebraucht die möglichst unabhängig von Lasermaterial einsetzbar ist und nicht zwingend den monolithischen Aufbau voraussetzt.

Aus diesen Gründen hat sich die Erfindung als Ziel gesetzt, einen alternativen Aufbau des Ringlasers eines Sagnac-Interferometes zu realisieren, der die verschiedenen Vorteile des monolithischen Festkörperlasers, wie die Verwendung der Totalreflexion, beibehält, aber darüber hinaus eine einfache Realisierung von Ringresonatoren verschiedener Größe und eine zusätzliche Methode zur Polarisation der Strahlung ermöglicht.

Diese Aufgabe wird in einer sehr einfachen Weise durch einen Festkörperlaserkreisel nach Patentanspruch 1 gelöst. Hierbei wird außer der Verwendung der Totalreflexion an den Grenzflächen ein Übertritt des Strahles durch die Grenzfläche so eingestellt, daß für den Einfallswinkel $\varphi_B$ von Luft ins Lasermedium die Relation tg $\varphi_B$ = 1/n immer gilt, wobei n den Brechungsindex des Lasermediums bezeichnet Dieser Winkel $\varphi_B$ ist bekanntlich der sog. Brewsterwinkel, bei dem die in der Einfallsebene polarisierte Welle ohne Reflexionsverluste die Grenzfläche durchquert und bei dem Wellen mit einer anderen Polarisationsrichtung an der Grenzfläche zum Teil wegreflektiert werden. In einem Laser mit einem internen Strahlübertritt unter dem Brewsterwinkel baut sich wegen dieser Verluste bekannterweise eine in der Vorzugsebene linear polarisierte Laseremission auf. Bei vielen kommerziellen Gas-Lasern werden z.B. planparallele Glasplatten mit dem Brewsterwinkel in dem Strahlengang als Fenster des Gasentladungsrohres für diesen Zweck integriert.

Damit Polarisationsplatten in den Strahlengang eines Festkörperringlasers eingesetzt werden können, muß der Strahl zugänglich sein, d.h. der Strahl muß innerhalb des Resonators von dem Festkörperlasermedium zur Luft übertreten. In den meisten verwendeten Festkörperlasern wird dies bwerkstelligt, indem der Laserstrahl senkrecht auf die Grenzfläche trifft und störende Reflexe mit Hilfe dielektrischer Interferenzschichten unterbunden werden. Die dielektrische Entspiegelung ist aber in einem Ringlaserkreisel, wie die Umlenkspiegel des HeNe-Ringlasers wegen der Bildung von Streulicht sehr nachteilig.

Mit der erfindungsgemäß vorgeschlagenen Strahlführung für einen Festkörperringlaserkreisel wird sowohl auf eine Entspiegelung beim Strahlübertritt, als auch auf eine Verspiegelung bei Strahlumlenkung verzichtet. Dies wird durch eine spezielle Geometrie des Lasermediums erreicht, dessen Grenzflächen so geschliffen sind, daß der Strahlübertritt immer unter dem Brewsterwinkel erfolgt, und gleichzeitig an allen anderen Flächen innerhalb des Mediums die Bedingung für die Totalreflexion für den Einfallswinkel mit dem Grenzwinkel $\varphi_T$ = arc sin 1/n erfüllt ist. Dadurch kann weiterhin die Länge des Festkörpers unabhängig von dem Durchmesser des Ringresonators ausgelegt werden und die gegenläufigen Ringwellen des Interferometers sind linear polarisiert.

Die Erfindung wird im folgenden anhand der in den Figuren teilweise schematisch dargestellten Ausführungsbeispiele näher beschrieben. Es zeigen:

Fig. 1        einen Festkörperlaserkreisel mit zweigeteiltem Lasermaterial,

Fig. 2        einen Festkörperlaserkreisel gemäß Fig. 1 mit Strahlversatz und - auskopplung und

Fig. 3        einen Festkörperlaserkreisel in kompakter Bauweise.

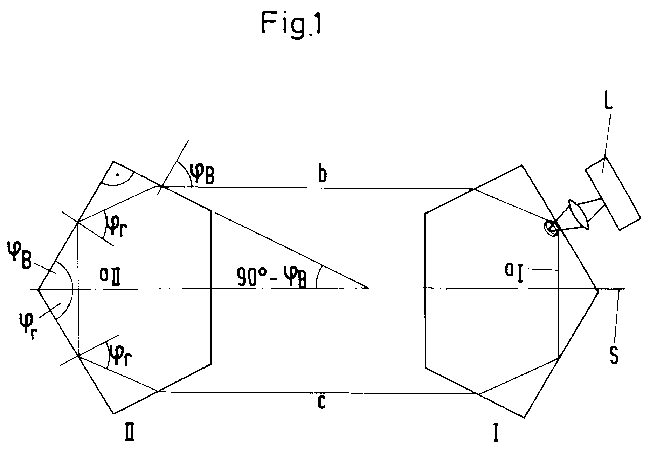

Bei dem in Figur 1 dargestellten Ausführungsbeispiel besteht das Lasermedium aus zwei prismatischen Körpern I und II, welche jeweils symmetrisch zu einer Symmetrieachse S geschliffen sind und in einem einstellbaren Abstand auf dieser Symmetrieachse angeordnet sind. Die Ringstrahlung weist nun zwei Pfade $a_I$ und $a_{II}$ auf, bei denen die Laserstrahlung in den Kristallen I und II verläuft, sowie zwei Pfade b und c, welche parallel zur Symmetrieachse S in Luft verlaufen. In den Pfaden b und c ist die Strahlung zur Beeinflussung durch weitere optische Mittel zugänglich.

Die Flächennormalen der Kristallflächen, auf welche die Pfade b und c treffen, bilden mit diesen den materialabhängigen Brewsterwinkel $\varphi_B$. Die Flächennormalen derjenigen Flächen, an denen die Strahlung längs der Pfade $a_I$ bzw. $a_{II}$ innerhalb des Kristalles reflektiert wird, bilden mit diesen Pfaden Winkel, die die Bedingung für Totalreflexion erfüllen, also zumindest den Grenzwinkel $\varphi_T$ aufweisen, welcher ebenfalls materialabhängig ist und sich aus $\varphi_T$ = arc sin 1/n errechnet.

Die Tabelle I zeigt für einige Kristalle und Gläser, die häufig als Laserwirtsmaterialien verwendet werden, den Brechungsindex n, den Brewsterwinkel $\varphi_B$ und den Grenzwinkel $\varphi_T$ der Totalreflextion.

Tabelle 1

| Material | Quarzglas | Phosphatglas | Nd:YAG | Nd:YLF |
|---|---|---|---|---|
| n | 1,568 | 1,503 | 1,448 | 1,82 |
| $\varphi_B$ | 57,47 | 56,45 | 55,37 | 61,21 |
| $\varphi_T$ | 39,62 | 41,71 | 43,67 | 33,32 |

Damit ein ebener, symmetrischer Ringstrahl bei der Brechung unter dem Brewsterwinkel $\varphi_B$ und Umlenkung durch Totalreflexion entsteht, muß die brechende Fläche zu der Symmetrieachse den Winkel $\varphi$ = (90°-$\varphi_B$ )haben, die Fläche der ersten Totalreflexion zu der brechenden Fläche den Winkel $\varphi$ = 90° und die Fläche der Totalreflexion zur Symmetrieachse einen Winkel $\varphi$ = $\varphi_B$.

Die optische Anregung des Ringlasers erfolgt über eine Laserdiode L, wobei aufgrund der relativ kurzen Strahlstrecke innerhalb des zweigeteilten Lasermateriales die Ausleuchtung der Lasermode relativ gleichmäßig gestaltet werden kann.

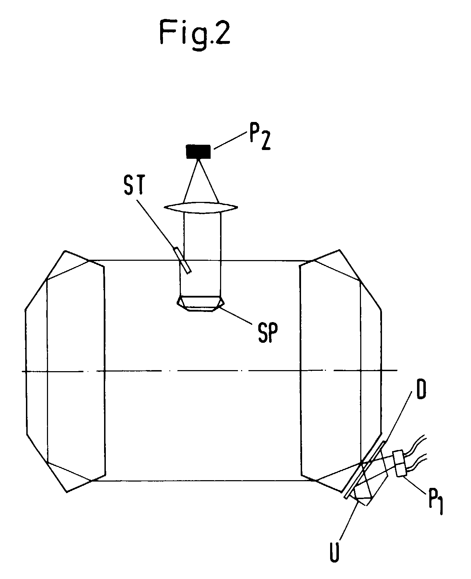

Das Ausführungsbeispiel gemäß Fig. 2 zeigt eine ähnliche Anordnung der Laserkristalle wie in Fig. 1, jedoch sind die beiden Kristallhälften senkrecht zur Symmetrieachse größer, so daß die von der Ringstrahlung umschlossene Fläche und somit das Verhältnis zwischen Fläche und Strahllänge größer als in Figur 1 ist, was gemäß Formel 1 zur Erhöhung der Meßauflösung genützt werden kann. Die Einkoppelung des Lichtes einer Laserdiode geschieht analog zu Fig. 1 und ist nicht dargestellt. Zur Auskopplung der gegenläufigen Ringstrahlung kann das bekannte Tunneln der Lichtquelle aus der Grenzfläche bei der Totalreflexion zu einer dielektrischen Platte D über einen Luftspalt mit einem Abstand unterhalb einer Wellenlänge verwendet werden. Die ausgekoppelte Strahlung gelangt dann über ein Umlenkprisma U zur Überlagung bei der gegenläufigen Strahlungen auf einen Photodetektor $P_1$.

Mit einer im freien Strahlengang der Ringstrahlung angeordneten Strahlteilerplatte St kann weiterhin ein Anteil der beiden Ringstrahlungen aus dem Strahlengang ausgekoppelt und auf eine Photodiode $P_2$ gerichtet werden. Da keine dielektrische Beschichtung der hochpolierten Teilerplatte notwendig ist und der Einfallswinkel nahe dem Brewsterwinkel sein kann, entsteht hier nur ein sehr geringes störendes Streulicht. Zur Realisierung des notwendigen Strahlversatzes der beiden Ringstrahlungen um einen doppelten Durchgang durch die Teilerplatte zu vermeiden, kann ein Strahlversatzprisma SP gleicher Bauart wie diejenigen des Ringlasers verwendet werden.

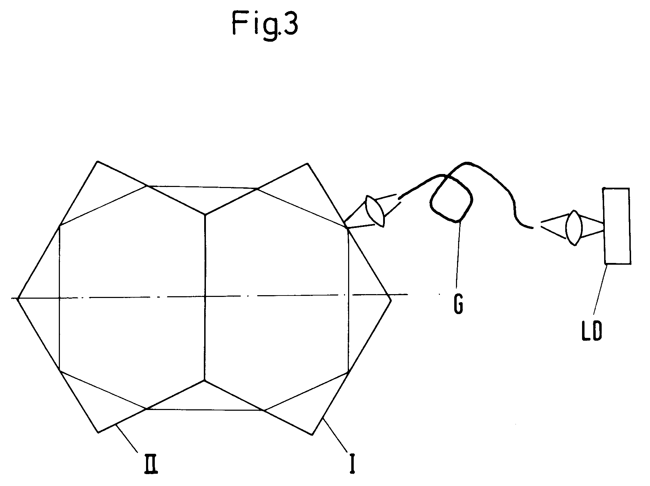

Bei dem in Fig. 3 dargestellten Ausführungsbeispiel sind zwei Laserkristalle gemäß Fig. 1 mit ihren gegeneinander gerichteten Flächen direkt verbunden, was z.B. durch Kleben oder Anspringen möglich ist, so daß ein sehr kompakter Ringlaserkreisel entsteht. Die Anregung des Lasermediums geschieht wiederum durch Abbildung der Pumpstrahlung in die Lasermode durch die Grenzfläche des Kristalls. Während in Fig. 1 die Emissionsfläche der Diode direkt abgebildet wurde, wird gemäß Fig. 3 die Strahlung einer Diode LD in eine Glasfaser G eingekoppelt und deren emittierende Stirnfläche in das Lasermedium abgebildet.

**Patentansprüche**

1. Diodengepumpter Festkörperlaserkreisel in dem ein Ringlaserstrahl an mindestens einer Stelle durch eine Grenzfläche des Lasermaterials zur Luft verläuft, **dadurch gekennzeichnet,** daß der Einfallswinkel ($\varphi_B$) des Ringstrahles bei der Brechung an der Grenzfläche gleich dem Brewsterwinkel des Lasermaterials ist und der Ringstrahl innerhalb des Lasermaterials an den Grenzflächen zur Luft durch Totalreflexion umgelenkt wird.

2. Diodengepumpter Festkörperlaserkreisel nach Anspruch 1, **dadurch gekennzeichnet,** daß das Lasermaterial aus zwei Hälften (I, II) besteht, an denen jeweils die Brechung des Ringlaserstrahles an jeder Grenzfläche des Strahlübergangs zur Luft unter dem Brewsterwinkel ($\varphi_B$) und im Inneren des Lasermaterials an den Grenzflächen die Umlenkung durch Totalreflexion erfolgt.

3. Diodengepumpter Festkörperlaserkreisel nach Anspruch 1 oder 2, **dadurch gekennzeichnet,** daß die Strahlung einer externen Pumpdiode (L) in das Innere des Lasermaterials entlang der Lasermode an einem oder mehreren Orten der Totalreflexion an der Grenzfläche abgebildet wird.

4. Diodengepumpter Festkörperlaserkreisel nach Anspruch 1 oder 2, **dadurch gekennzeichnet,** daß die Strahlung einer externen Pumpdiode (LD) über eine Glasfaser (G) geleitet wird und die Austrittsfläche des Faserendes in das Lasermaterial entlang der Lasermode an einem oder mehreren Orten der Totalreflexion an der Grenzfläche abgebildet wird.

5. Diodengepumpter Festkörperlaserkreisel nach einem der Ansprüche 1 bis 4, **dadurch gekennzeichnet,** daß ein Teil der Ringstrahlung zur Messung der Differenzfrequenz durch Tunneln des Lichtes am Ort der Totalreflexion über einen kurzen Luftspalt zu einem externen Dielektrikum (D) ausgekoppelt wird.

6. Diodengepumpter Festkörperlaserkreisel nach einem der Ansprüche 1 bis 5 **dadurch gekennzeichnet,** daß ein Teil der Ringwellen zur Messung der Differenzfrequenz durch eine Strahlteilerplatte (ST) im Strahlengang außerhalb des Lasermediums ausgekoppelt wird.

7. Diodengepumpter Festkörperlaserkreisel nach einem der Ansprüche 1 bis 6, **dadurch gekennzeichnet,** daß in aufeinander senkrechten Ebenen aufgebauten Ringlasern des Keisels zur Messung von Drehraten um alle Raumrichtungen verwendet werden.

# Fig.1

# Fig.2

# Fig.3